# EUROPEAN PATENT APPLICATION

(11) **EP 2 660 531 A1**
(43) Date of publication of application: **06.11.2013**
(21) Application number: 11852267.1
(22) Date of filing: 19.12.2011
(51) Int. Cl.: F24H 9/18, B60H 1/03, B60H 1/22, F24H 1/10, F24H 1/12, F24H 9/00, F28F 3/08

(54) **METHOD FOR MANUFACTURING HOT-WATER HEATER, AND HOT-WATER HEATER MANUFACTURED THEREBY**

(30) Priority: 28.12.2010 JP 2010294203
(71) Applicant: Mitsubishi Heavy Industries Automotive Thermal Systems Co., Ltd., Aichi 452-8561 (JP)
(72) Inventor: YOSHITOMI, Kei, Tokyo 108-8215 (JP); SAITO, Katsuhiro, Tokyo 108-8215 (JP)
(74) Representative: Henkel, Breuer & Partner
(86) International application number: PCT/JP2011/079307
(87) International publication number: WO 2012/090748

(57) **Abstract**

Provided is a hot-water heater manufacturing method capable of obtaining stable heat exchange characteristics by applying a moderate contact surface pressure between heating-medium circulating tubes and heater members that constitute a hot-water heater, and capable of improving the reliability by enhancing the joint strength between the heating-medium circulating tubes, with a simple and easy manufacturing process. The hot-water heater manufacturing method includes a heating-medium circulating tube forming step of forming heating-medium circulating tubes (2) by brazing tube constituent members (6); a positioning and pressing step of arranging the heating-medium circulating tubes (2) in parallel, disposing heater members (4) between the heating-medium circulating tubes (2), and, while positioning the heating-medium circulating tubes (2) and the heater members (4), pressing the heating-medium circulating tubes (2) and the heater members (4) in the laminating direction thereof such that the heater members (4) are brought into close contact with heater contact surfaces (7) of the heating-medium circulating tubes (2); and a tube joining step of joining the heating-medium circulating tubes (2) that have been positioned in the positioning and pressing step.

## Description

### {Technical Field}

The present invention relates to a hot-water heater manufacturing method in which heaters are installed between a plurality of flow channels in which a heating medium flows, thus heating the heating medium, and also relates to a hot-water heater manufactured by this method.

### {Background Art}

In general vehicles that run on power from an engine, as is well known, engine cooling water serving as a heating medium is circulated to a heater core, and air-conditioning air is made to pass through the heater core to perform heat exchange, thereby performing vehicle heating. On the other hand, in hybrid vehicles that run on power from an engine in combination with power from an electric motor and in electric vehicles that run on only driving force of an electric motor, such as electric cars, because the engine is stopped during driving or an engine is not installed therein, it is impossible to perform effective vehicle heating by using the heat of engine cooling water.

Thus, for example, in hybrid vehicles, a hot-water heater for heating is connected to the engine cooling water path, and, when the heating capability is insufficient because it is hard to increase the temperature of the engine cooling water during fuel-efficient driving etc., the hot-water heater additionally heats the engine cooling water to complement heating performed by the heater core.

The above-described hot-water heater has a simple structure in which a plurality of flat heating-medium circulating tubes, in which the engine cooling water is circulated as the heating medium, are laminated, and plate-like heater members are interposed between the heating-medium circulating tubes. As the heater members, it is preferable to use PTC heaters that have, as heat generating elements, PTC (Positive Temperature Coefficient) elements, specifically, positive-temperature-coefficient thermistor elements. In PTC heaters, which have positive-temperature-coefficient thermistor characteristics, the resistance increases as the temperature increases, the consumption current is controlled to make the increase in temperature slow, and then, the consumption current and the temperature of the heating part reach a saturated range to become stable. Because self temperature controllability is provided, the PTC heaters are suitable for use in vehicle air-conditioning heating.

There are conventionally-known laminated-type coolers, such as that disclosed in PTL (Patent Literature) 1, for example, in which, as described above, a plurality of flat heating-medium circulating tubes in which cooling water is circulated are laminated, and plate-like electronic components are interposed therebetween, thus performing heat exchange between the electronic components and the cooling water. In a method of manufacturing this laminated-type cooler, first, the plurality of flat heating-medium circulating tubes are made of aluminum material etc., next, the heating-medium circulating tubes are laminated parallel to each other with predetermined gaps therebetween, thus being temporarily assembled, next, the temporarily-assembled heating-medium circulating tubes are made into one piece through furnace brazing etc., and finally, the plate-like electronic components are inserted between the heating-medium circulating tubes, thus completing the laminated-type cooler.

As a general method of manufacturing a flat heating-medium circulating tube, front-and-back outer shell plates, forming a pair, are made to face each other so as to form a space therebetween and are brazed, as in a cooling tube disclosed in PTL 2, for example. According to this manufacturing method, it is possible to easily manufacture heating-medium circulating tubes merely by press-molding many identical-shaped outer shell plates and brazing them.

### {Citation List}

### {Patent Literature}

{PTL 1} Japanese Unexamined Patent Application, Publication No. 2005-142305
{PTL 2} Japanese Unexamined Patent Application, Publication No. 2008-166423

### {Summary of Invention}

### {Technical Problem}

In order to stably perform heat exchange between the heating medium (cooling water) flowing in the heating-medium circulating tubes and electronic components (PTC heaters), flat surfaces of the heating-medium circulating tubes and the electronic components need to be brought into close contact with each other with a moderate contact surface pressure. However, with the manufacturing method used for the laminated-type cooler disclosed in PTL 1, in which the plurality of heating-medium circulating tubes are integrated into one piece through brazing, and then the plate-like electronic components are inserted between the heating-medium circulating tubes, the heating-medium circulating tubes and the electronic components are not always successfully brought into close contact with each other, thus making it difficult to obtain stable heat exchange characteristics, or, in contrast, there is a risk that the heating-medium circulating tubes and the electronic components are brought into contact with an excessive surface pressure, thus exerting stress on the heating-medium circulating tubes themselves and joint portions thereof. This is caused by dimensional errors of each part or assembly errors, and skill as well as time and effort are required to ensure a moderate contact surface pressure, which tends to cause variations in completed products.

Furthermore, when the hot-water heater is manufactured by the above-described method, because the step of manufacturing a heater main body by temporarily assembling and furnace brazing the heating-medium circulating tubes is separated from the step of inserting the heater members (the PTC heaters) into the heater main body for attachment, the whole manufacturing process is inevitably complicated. Note that the PTC heaters are formed as a unit by using various assembly-related members, such as an insulator, a wiring material, and an adhesive agent, and are installed in the hot-water heater; however, because the heat-resistant temperatures of the above-described assembly-related members are generally lower than the temperature of a furnace (500 °C or more) in which the heating-medium circulating tubes are subjected to furnace brazing, it is impossible to apply furnace brazing to the temporarily-assembled heater main body in which the PTC heaters that have been formed as a unit are installed in advance. Therefore, separate steps are required.

The present invention has been made to solve the above-described problems, and an object thereof is to provide a hot-water heater manufacturing method and a hot-water heater manufactured by this method, with which stable heat exchange characteristics can be obtained by applying a moderate contact surface pressure between the heating-medium circulating tubes and the heater members, which constitute the hot-water heater, and in which the reliability can be improved by enhancing the joint strength between the heating-medium circulating tubes, by using a simple and easy manufacturing process.

### {Solution to Problem}

In order to achieve the above-described object, the present invention provides the following solutions.
Specifically, a first aspect of the present invention is a hot-water heater manufacturing method in which a plurality of tube constituent members formed of a sheet-metal material are brazed, thus forming heating-medium circulating tubes having heater contact surfaces; the heating-medium circulating tubes are arranged in parallel and are joined such that a heating medium can circulate therebetween, thus forming a heater main body; and heater members are interposed between the heating-medium circulating tubes and are brought into close contact with the heater contact surfaces, thus heating the heating medium flowing in the heating-medium circulating tubes, the hot-water heater manufacturing method including: a heating-medium circulating tube forming step of forming the heating-medium circulating tubes by brazing the tube constituent members; a positioning and pressing step of arranging the heating-medium circulating tubes in parallel, disposing the heater members between the heating-medium circulating tubes, and, while positioning the heating-medium circulating tubes and the heater members, pressing the heating-medium circulating tubes and the heater members in a laminating direction thereof such that the heater members are brought into close contact with the heater contact surfaces of the heating-medium circulating tubes; and a tube joining step of joining the heating-medium circulating tubes that have been positioned in the positioning and pressing step.

According to the above-described structure, the heating-medium circulating tubes are formed in the heating-medium circulating tube forming step, and, in the subsequent positioning and pressing step, the heater members are disposed between the plurality of heating-medium circulating tubes that have been arranged in parallel, and the heating-medium circulating tubes and the heater members are pressed in the laminating direction thereof, thereby positioning the heating-medium circulating tubes and the heater members while the heater members are brought into close contact with the heater contact surfaces of the heating-medium circulating tubes by means of a moderate applied contact surface pressure. Then, in the subsequent tube joining step, the plurality of heating-medium circulating tubes that have been positioned and pressed are joined together while the heater members are interposed therebetween. Because the heater members are brought into close contact with the heater contact surfaces of the heating-medium circulating tubes by means of a moderate applied contact surface pressure and are fixed, in this way, it is possible to give stable heat exchange characteristics between the heating-medium circulating tubes and the heater members.

Then, because a step of manufacturing the heater main body by joining the heating-medium circulating tubes in a liquid-tight manner and a step of attaching the heater members to the heater main body are simultaneously performed in the tube joining step, the hot-water heater manufacturing process can be made simple and easy.

Furthermore, in the hot-water heater manufacturing method according to a second aspect of the present invention, in the positioning and pressing step of the hot-water heater manufacturing method according to the first aspect, the heating-medium circulating tubes are laminated and positioned such that heating-medium circulating holes that are formed so as to penetrate the heating-medium circulating tubes in the laminating direction thereof are aligned; and, in the tube joining step, circumferential portions of the heating-medium circulating holes are joined through brazing by inserting a heating device into inner circumferences of the heating-medium circulating holes to heat inner circumferential portions of the heating-medium circulating holes.

According to the above-described structure, in the positioning and pressing step, the heating-medium circulating tubes are laminated and positioned such that the heating-medium circulating holes, which are formed so as to penetrate the heating-medium circulating tubes, are aligned, and, in the tube joining step, the heating device, such as a brazing iron, is inserted into the inner circumferential portions of the heating-medium circulating holes, thus brazing the circumferential portions of the heating-medium circulating holes; therefore, the task of positioning and joining the heating-medium circulating tubes is made simple and easy.

Furthermore, in the hot-water heater manufacturing method according to a third aspect of the present invention, in the heating-medium circulating tube forming step of the hot-water heater manufacturing method according to the first or second aspect, the heating-medium circulating tubes are formed by brazing the tube constituent members; joining of the heating-medium circulating tubes in the tube joining step is performed also through brazing; and a brazing filler metal having a lower melting point than a brazing filler metal that is used in the heating-medium circulating tube forming step is used as a brazing filler metal that is used in the tube joining step.

According to the above-described structure, to braze the heating-medium circulating tubes in the tube joining step, it is only necessary to perform brazing while heating the heating-medium circulating tubes at a temperature lower than the melting point of the brazing filler metal used to form the heating-medium circulating tubes. Therefore, there is no risk that portions that have been brazed in the heating-medium circulating tube forming step will be melted when heated in the tube joining step, thus disassembling the heating-medium circulating tubes. Thus, the joining task in the tube joining step can be made simple and easy.

Furthermore, in the hot-water heater manufacturing method according to a fourth aspect of the present invention, in the hot-water heater manufacturing method according to the second or third aspect, a brazing filler metal is attached, in advance, to the circumferential portions of the heating-medium circulating holes, and the brazing filler metal is melted in the tube joining step, thereby joining the circumferential portions of the heating-medium circulating holes through brazing.

According to the above-described structure, because the brazing filler metal is attached, in advance, to the circumferential portions of the heating-medium circulating holes, which become joint portions between the heating-medium circulating tubes, when the plurality of laminated heating-medium circulating tubes are pressed in the positioning and pressing step, the portions of attached brazing filler metal are pressed against each other, and, when the circumferential portions of the heating-medium circulating holes are heated in the subsequent tube joining step, the attached brazing filler metal is melted, thus joining the circumferential portions of the heating-medium circulating tubes. Thus, in particular, in the tube joining step, because it is not necessary to apply a brazing filler metal from the outside, and it is only necessary to perform heating, the joining task in the tube joining step can be made simple and easy.

Furthermore, in the hot-water heater manufacturing method according to a fifth aspect of the present invention, in the hot-water heater manufacturing method according to one of the second to fourth aspects, the circumferential portions of the heating-medium circulating holes are provided with sections having fitting shapes, and the sections having the fitting shapes are fitted into the facing heating-medium circulating holes in the positioning and pressing step, thereby performing positioning.

According to the above-described structure, because the heating-medium circulating holes of the heating-medium circulating tubes are fitted together by means of the sections having the fitting shapes, the relative position of the facing heating-medium circulating tubes is not shifted in the positioning and pressing step, thereby making it possible to perform the positioning task simply and easily.

Furthermore, in the hot-water heater manufacturing method according to a sixth aspect of the present invention, in the hot-water heater manufacturing method according to the fifth aspect, the sections having the fitting shapes are upright fitting flanges that are formed continuously in the circumferential directions of the heating-medium circulating holes. According to this structure, it is possible to simplify the task of positioning the heating-medium circulating tubes by means of the sections having the fitting shapes and also to dramatically improve the brazing strength when brazing is performed along the circumferential directions of the heating-medium circulating holes, to enhance the joint strength between the heating-medium circulating tubes, thus improving the reliability of the hot-water heater.

Furthermore, in the hot-water heater manufacturing method according to a seventh aspect of the present invention, in the positioning and pressing step of the hot-water heater manufacturing method according to the sixth aspect, the fitting flanges are fitted into the facing heating-medium circulating holes, and then, in the tube joining step, the fitting flanges are expanded in diameter toward radially outer sides of the heating-medium circulating holes, thereby joining the heating-medium circulating tubes. According to this structure, it is possible to simplify the task of positioning the heating-medium circulating tubes through fitting of the fitting flanges and also to enhance the coupling strength between the heating-medium circulating tubes by expanding the diameters of the fitting flanges, thus improving the reliability of the hot-water heater.

A hot-water heater according to another aspect of the present invention is manufactured by a hot-water heater manufacturing method according to one of the first to seventh aspects. According to this hot-water heater, because the heating-medium circulating tubes and the heater members are brought into close contact with each other with a moderate contact surface pressure, stable heat exchange characteristics can be obtained.

### {Advantageous Effects of Invention}

As described above, according to a hot-water heater manufacturing method of the present invention and a hot-water heater manufactured by this method, with a simple and easy manufacturing process, it is possible to obtain stable heat exchange characteristics by applying a moderate contact surface pressure between the heating-medium circulating tubes and the heater members and to improve the reliability by enhancing the joint strength between the heating-medium circulating tubes.

### {Brief Description of Drawings}

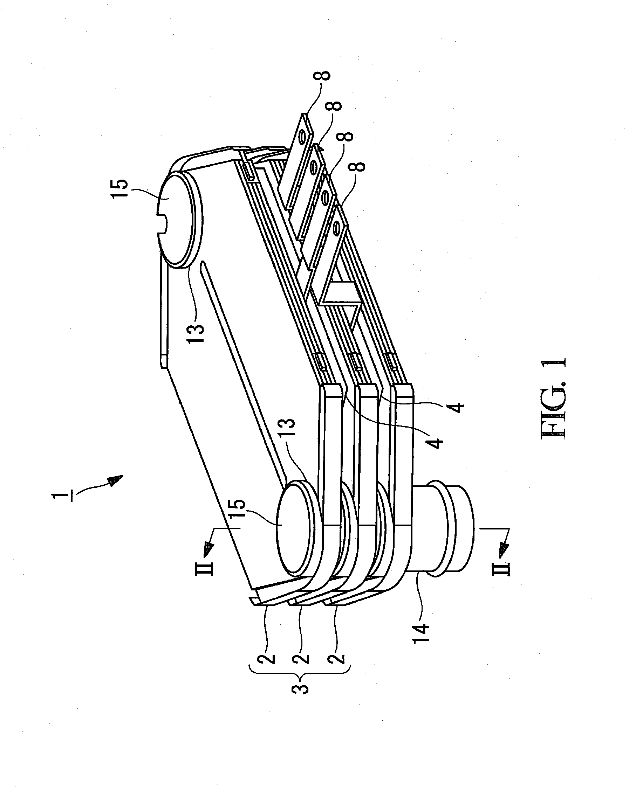

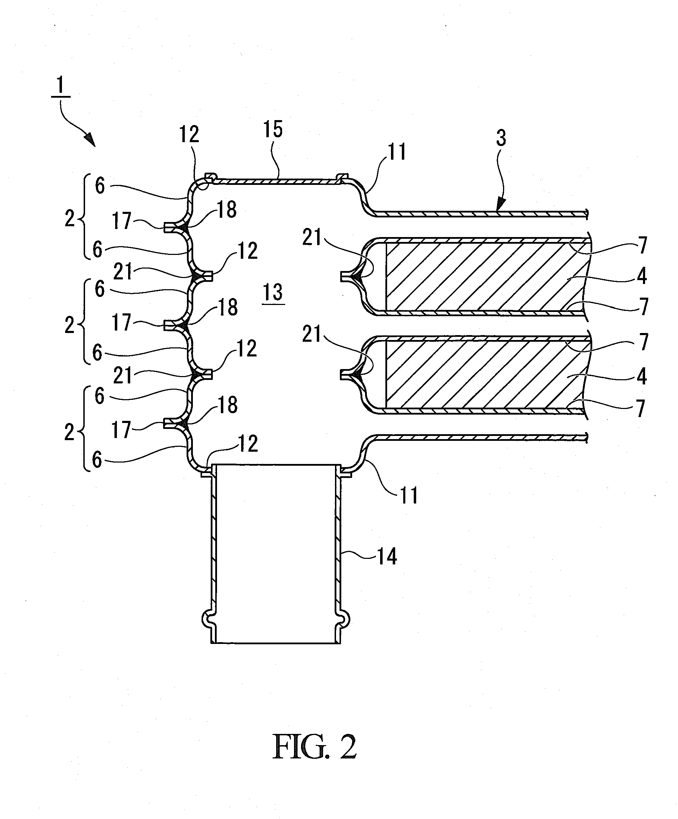

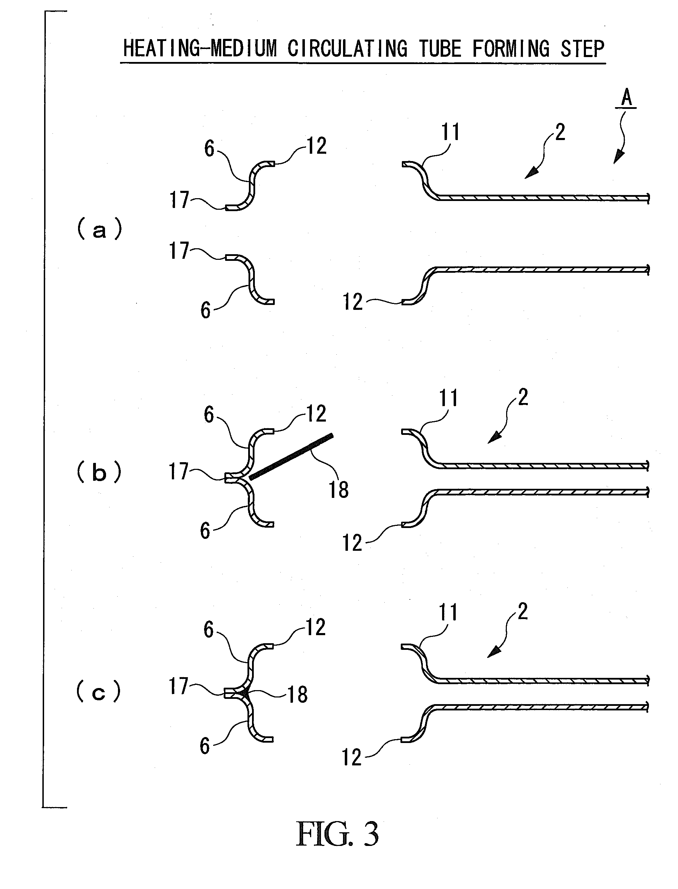

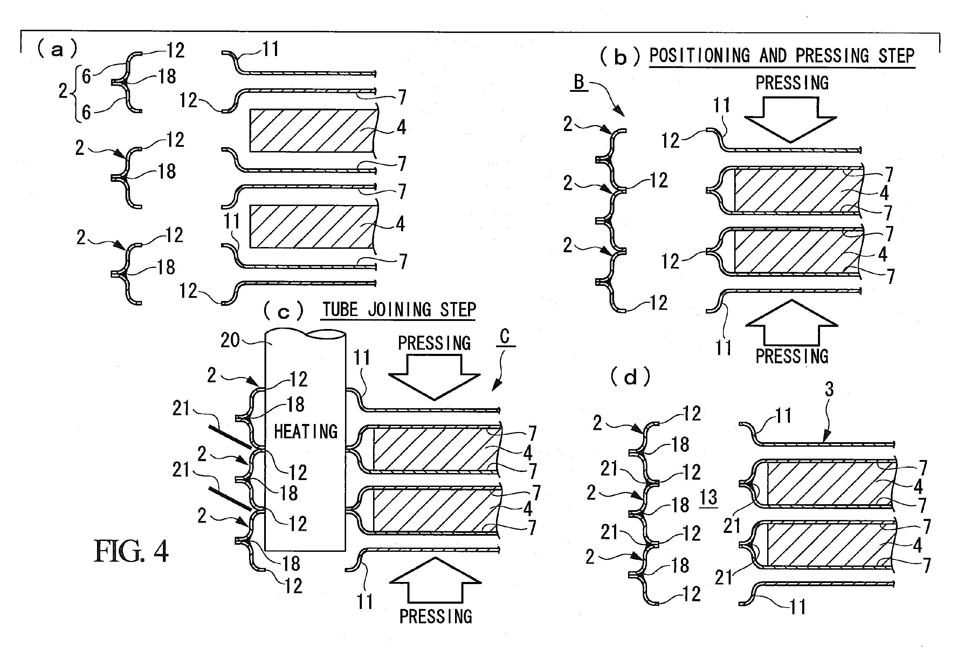

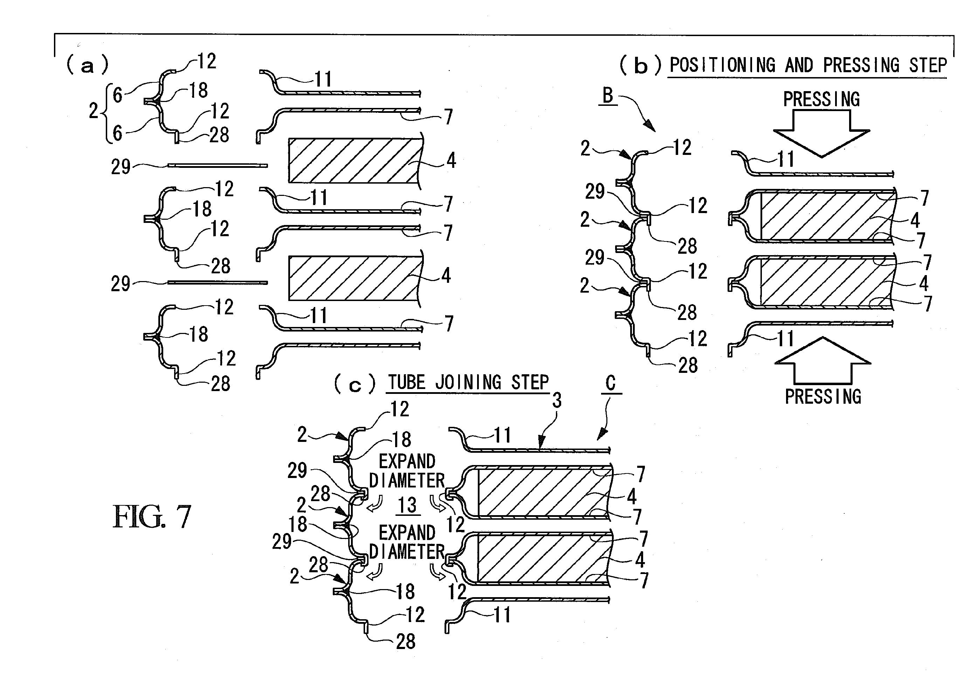

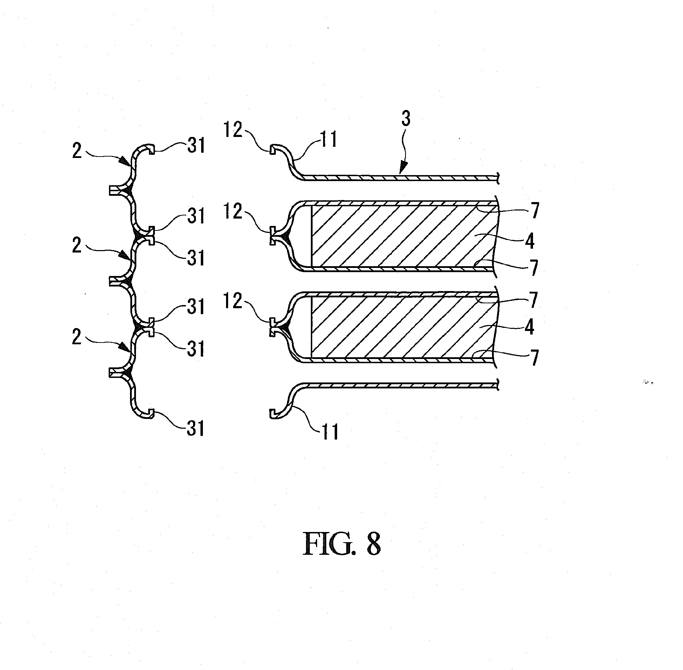

{Fig. 1} Fig. 1 is a perspective view showing an example hot-water heater to which a manufacturing method according to the present invention can be applied.
{Fig. 2} Fig. 2 is a longitudinal sectional view of the hot-water heater shown in Fig. 1, along the line II-II.
{Fig. 3} Figs. 3(a) to 3(c) show a heating-medium circulating tube forming step. Fig. 3(a) is a longitudinal sectional view showing a state in which tube constituent members have not been brazed; Fig. 3(b) is a longitudinal sectional view showing a state in which the tube constituent members are being brazed; and Fig. 3(c) is a longitudinal sectional view showing a state in which the tube constituent members have been brazed, thus completing a heating-medium circulating tube.
{Fig. 4} Figs. 4(a) to 4(d) show a hot-water heater manufacturing method according to a first embodiment of the present invention. Fig. 4(a) is a longitudinal sectional view showing a state in which the heater members have been disposed between a plurality of heating-medium circulating tubes; Fig. 4(b) is a longitudinal sectional view showing a positioning and pressing step; Fig. 4(c) is a longitudinal sectional view showing a tube joining step; and Fig. 4(d) is a longitudinal sectional view showing a completed state of the hot-water heater.
{Fig. 5} Figs. 5(a) to 5(d) show a hot-water heater manufacturing method according to a second embodiment of the present invention. Fig. 5(a) is a longitudinal sectional view showing a state in which the heater members have been disposed between the plurality of heating-medium circulating tubes;
Fig. 5(b) is a longitudinal sectional view showing a positioning and pressing step; Fig. 5(c) is a longitudinal sectional view showing a tube joining step; and Fig. 5(d) is a longitudinal sectional view showing a completed state of the hot-water heater.
{Fig. 6} Figs. 6(a) to 6(d) show a hot-water heater manufacturing method according to a third embodiment of the present invention. Fig. 6(a) is a longitudinal sectional view showing a state in which the heater members have been disposed between the plurality of heating-medium circulating tubes;
Fig. 6(b) is a longitudinal sectional view showing a positioning and pressing step; Fig. 6(c) is a longitudinal sectional view showing a tube joining step; and Fig. 6(d) is a longitudinal sectional view showing a completed state of the hot-water heater.
{Fig. 7} Figs. 7(a) to 7(c) show a hot-water heater manufacturing method according to a fourth embodiment of the present invention. Fig. 7(a) is a longitudinal sectional view showing a state in which the heater members and packing members have been disposed between the plurality of heating-medium circulating tubes; Fig. 7(b) is a longitudinal sectional view showing a positioning and pressing step; and
Fig. 7(c) is a longitudinal sectional view showing a tube joining step and a completed state of the hot-water heater.
{Fig. 8} Fig. 8 is a longitudinal sectional view showing a modification of the hot-water heater of the present invention.

### {Description of Embodiments}

Hot-water heater manufacturing methods according to a plurality of embodiments of the present invention will be described below with reference to the drawings. Fig. 1 is a perspective view showing an example hot-water heater 1 to which a manufacturing method of the present invention can be applied. Fig. 2 is a longitudinal sectional view of the hot-water heater 1 shown in Fig. 1, along the line II-II. The hot-water heater 1 is generally configured to be installed in a hybrid vehicle, for example. In hybrid vehicles in which an engine works together with an electric motor, thus making it hard to increase the temperature of engine cooling water, which tends to result in insufficient heating capability, the hot-water heater 1 additionally heats the engine cooling water to complement heating performed by a heater core.

The hot-water heater 1 is composed of, for example, a heater main body 3 in which three, namely, upper, middle, and lower, flat heating-medium circulating tubes 2 are laminated parallel to each other with predetermined gaps therebetween and two plate-like heater members 4 that are interposed in the gaps between the heating-medium circulating tubes 2. The heating-medium circulating tubes 2 are fin-like tubes having a hexagonal shape in plan view, for example. As shown in Fig. 2, the heating-medium circulating tubes 2 are each structured such that a pair of upper-and-lower tube constituent members 6 made of a sheet-metal material, such as aluminum or brass, are made to face each other and brazed, thereby being joined.

Upper and lower surfaces of the individual heating-medium circulating tubes 2 serve as flat heater contact surfaces 7, and the heater members 4 are brought into close contact with the heater contact surfaces 7, thereby heating the engine cooling water, which serves as a heating medium, flowing in the heating-medium circulating tubes 2. PTC heaters are used as the heater members 4, for example, and two power-input terminals 8 extend from the two heater members 4, respectively. Both or one of the two heater members 4 are or is actuated to produce heat, depending on the required heating level.

Tank convex portions 11 that are convex upward or downward are formed in the shape of bulges at both ends of each heating-medium circulating tube 2. Round heating-medium circulating holes 12 are formed so as to penetrate upper and lower surfaces of the tank convex portions 11. Then, by laminating the heating-medium circulating tubes 2 so as to align the heating-medium circulating holes 12 of the heating-medium circulating tubes 2 and joining the heating-medium circulating tubes 2 in a liquid-tight manner through brazing etc., the three heating-medium circulating tubes 2 are fixed parallel to each other with predetermined gaps therebetween, and six tank convex portions 11 are vertically laminated on each side, thus forming a substantially cylindrical distribution tank 13. A hose-connecting union 14 is secured to the lowest heating-medium circulating hole 12 of the distribution tank 13, and the highest heating-medium circulating hole 12 of the distribution tank 13 is covered with a cover member 15.

An inlet hose and an outlet hose (which are not shown) are connected to the two unions 14. Engine cooling water supplied from an engine side flows into one of the distribution tanks 13 from the inlet hose, flows toward the other one of the distribution tanks 13 while evenly passing through the three heating-medium circulating tubes 2 and being heated by the heater members 4, and is supplied to a heater core side from the outlet hose. In this way, in the hot-water heater 1, the engine cooling water can be circulated between the three heating-medium circulating tubes 2 via the distribution tanks 13.

### First Embodiment

Next, a hot-water heater manufacturing method according to a first embodiment of the present invention will be described with reference to Figs. 3 and 4. The hot-water heater manufacturing method includes a heating-medium circulating tube forming step A, a positioning and pressing step B, and a tube joining step C.

### A. Heating-Medium Circulating Tube Forming Step

Figs. 3(a) to 3(c) show the heating-medium circulating tube forming step A of forming the heating-medium circulating tubes 2. As shown in Fig. 3(a), each of the heating-medium circulating tubes 2 is composed of a pair of upper-and-lower tube constituent members 6. The tube constituent members 6 are made of a sheet-metal material, such as aluminum or brass, as described earlier, and are pressed into shapes, the tank convex portions 11 are formed in the shape of bulges at both ends thereof, and joining margins 17 are formed around the entire circumferences thereof.

The tube constituent members 6, forming a pair, are temporarily fixed while facing each other, as shown in Fig. 3(b), and the joining margins 17 that have been brought into contact with each other are joined through brazing. Reference numeral 18 denotes a brazing filler metal. The brazing filler metal 18 is melted by heat and flows in the longitudinal direction of a joint groove that is formed inside the joining margins 17, due to capillary action, as shown in Fig. 3(c), thereby integrally fixing the upper-and-lower tube constituent members 6 to complete the heating-medium circulating tube 2.

### B. Positioning and Pressing Step

Next, as shown in Fig. 4(a), the three heating-medium circulating tubes 2, formed in the above-described heating-medium circulating tube forming step A, are arranged in parallel, and the heater members 4 are disposed between the heating-medium circulating tubes 2. Then, as shown in Fig. 4(b), the heating-medium circulating tubes 2 are laminated, the above-described heating-medium circulating holes 12, which are formed so as to penetrate the heating-medium circulating tubes 2 in the laminating direction thereof, are aligned, and the heating-medium circulating tubes 2 and the heater members 4 are pressed in the laminating direction thereof while being positioned such that the heater members 4 are brought into close contact with predetermined positions of the heater contact surfaces 7 of the heating-medium circulating tubes 2 with a moderate surface pressure (the positioning and pressing step B). To press the heating-medium circulating tubes 2 and the heater members 4 while positioning them, as described above, a cramp member or a retaining jig (not shown) is used. Note that, in the state of Fig. 4(a), for example, flexible sheet members having heat-transfer characteristics, such as silicon sheets, or a heat transfer paste may be interposed in advance between the heater contact surfaces 7 of the heating-medium circulating tubes 2 and the heater members 4.

### C. Tube Joining Step

Next, as shown in Fig. 4(c), the heating-medium circulating tubes 2 that have been positioned and pressed are joined (the tube joining step C). Here, it is desirable to join the heating-medium circulating tubes 2 through brazing, too; however, it is also possible to join them by means of adhesive bonding or swaging, as needed.

As a heating method for brazing, in this embodiment, a brazing iron (heating device) 20 is inserted into the inner circumferences of the heating-medium circulating holes 12 to heat inner circumferential portions of the heating-medium circulating holes 12. Then, a brazing filler metal 21 is supplied from outer circumferential sides of the heating-medium circulating holes 12 to join the circumferential portions of the heating-medium circulating holes 12 through brazing. When the vicinities of the heating-medium circulating holes 12 are heated with the brazing iron 20, the brazing filler metal 21 applied to the outer circumferential sides of the heating-medium circulating holes 12 is melted and flows around the circumferences of the heating-medium circulating holes 12 along joint grooves that are formed on joint surfaces of the heating-medium circulating holes 12, due to capillary action, as shown in Fig. 4(d), thereby integrally fixing the upper-and-lower heating-medium circulating tubes 2 to complete the heater main body 3.

As the brazing filler metal 21 used in the tube joining step C, it is preferable to use one having a lower melting point than the brazing filler metal 18 used in the heating-medium circulating tube forming step A. For example, one having a melting point of about 577 °C to 615 °C is used as the brazing filler metal 18, and one having a melting point of about 520 °C to 585 °C is used as the brazing filler metal 21. Then, the heating temperature of the brazing iron 20 is set lower than the melting point of the brazing filler metal 18 so as to prevent the brazing filler metal 18 from being melted due to the temperature of the brazing iron 20 in the tube joining step C. Note that aluminum solder (having a melting point of 382 °C) containing zinc etc. may be used as the brazing filler metal.

Finally, the cover members 15 and the unions 14 are fixed to the upper and lower surfaces of the respective distribution tanks 13 through brazing etc., as shown in Fig. 2, thus completing the heater main body 3. Because the heater members 4 have already been disposed between the heating-medium circulating tubes 2 by this time, this completes the hot-water heater 1.

Note that, in the tube joining step C, instead of joining the heating-medium circulating tubes 2 through brazing, it is also conceivable to use a method of bonding the heating-medium circulating tubes 2 in a liquid-tight manner with a liquid gasket (sealant). In that case, in the state in Fig. 4(a), in which the heating-medium circulating tubes 2 have not yet been laminated, the liquid gasket is applied in advance to the circumferences of the heating-medium circulating holes 12, and the heating-medium circulating tubes 2 are held with pressure while being laminated, as shown in Fig. 4(b), to make the liquid gasket harden. According to this method, because the brazing in Fig. 4(c) can be eliminated, it is possible to simplify the process and to avoid a reduction in product yield due to poor brazing.

According to the above-described hot-water heater manufacturing method, the heating-medium circulating tubes 2 formed in the heating-medium circulating tube forming step A are arranged in parallel in the subsequent positioning and pressing step B, the heater members 4 are interposed therebetween, the heating-medium circulating tubes 2 and the heater members 4 are positioned, and, at the same time, the heating-medium circulating tubes 2 and the heater members 4 are pressed in the laminating method thereof, thereby performing positioning while the heater members 4 are brought into close contact with the heater contact surfaces 7 of the heating-medium circulating tubes 2 with a moderate contact surface pressure.

Then, in the subsequent tube joining step C, the heating-medium circulating tubes 2 that have been positioned and pressed are joined together, with the heater members 4 interposed therebetween. Thus, it is possible to complete the hot-water heater 1 with a moderate contact surface pressure applied between the heating-medium circulating tubes 2 and the heater members 4 and to endow the hot-water heater 1 with stable heat exchange characteristics by preventing the heater members 4 from being detached from the heater contact surfaces 7 of the heating-medium circulating tubes 2.

In contrast, it is possible to prevent the heater members 4 from being pressed against the heater contact surfaces 7 of the heating-medium circulating tubes 2 with an excessive surface pressure, thus eliminating the risk of exerting stress on the heating-medium circulating tubes 2 and the joint portions thereof. In particular, when the hot-water heater 1 is installed in a vehicle, engine vibrations and driving vibrations are constantly transferred thereto. Therefore, if an excessive surface pressure is applied between the heating-medium circulating tubes 2 and the heater members 4, early damage to brazed portions etc. is likely to occur. According to the present invention, while enhancing the heat exchange performance of the hot-water heater 1 by maintaining a moderate contact surface pressure between the heating-medium circulating tubes 2 and the heater members 4, the life of the hot-water heater 1 can be extended.

Furthermore, because a step of joining the plurality of heating-medium circulating tubes 2 to manufacture the heater main body 3 and a step of attaching the heater members 4 to the heater main body 3 are simultaneously performed in the tube joining step C, the manufacturing process of the hot-water heater 1 can be made simple and easy.

Furthermore, in the positioning and pressing step B, the heating-medium circulating tubes 2 are laminated and positioned so as to align the heating-medium circulating holes 12, which are formed so as to penetrate the heating-medium circulating tubes 2 in the laminating direction thereof, and, in the tube joining step C, a heating device, such as the brazing iron 20, is inserted into the inner circumferences of the aligned heating-medium circulating holes 12, to heat the inner circumferential portions of the heating-medium circulating holes 12, thereby joining the circumferential portions of the heating-medium circulating holes 12 through brazing. Therefore, the task of positioning and joining the heating-medium circulating tubes 2 can be made simple and easy.

Furthermore, as the brazing filler metal 21, which is used to braze the heating-medium circulating tubes 2 in the tube joining step C, one having a lower melting point than the brazing filler metal 18, which is used to form the heating-medium circulating tubes 2 in the heating-medium circulating tube forming step A, is used. Therefore, to braze the heating-medium circulating tubes 2 in the tube joining step C, when the brazing task is performed at a temperature allowing only the brazing filler metal 21, which has a lower melting point, to be melted, it is possible to prevent the brazing filler metal 18, which is used to join the tube constituent members 6 of the heating-medium circulating tubes 2, from being melted by that heat, thereby eliminating concern about disassembly of the heating-medium circulating tubes 2. Therefore, the joining task in the tube joining step C can be made simple and easy.

### Second Embodiment

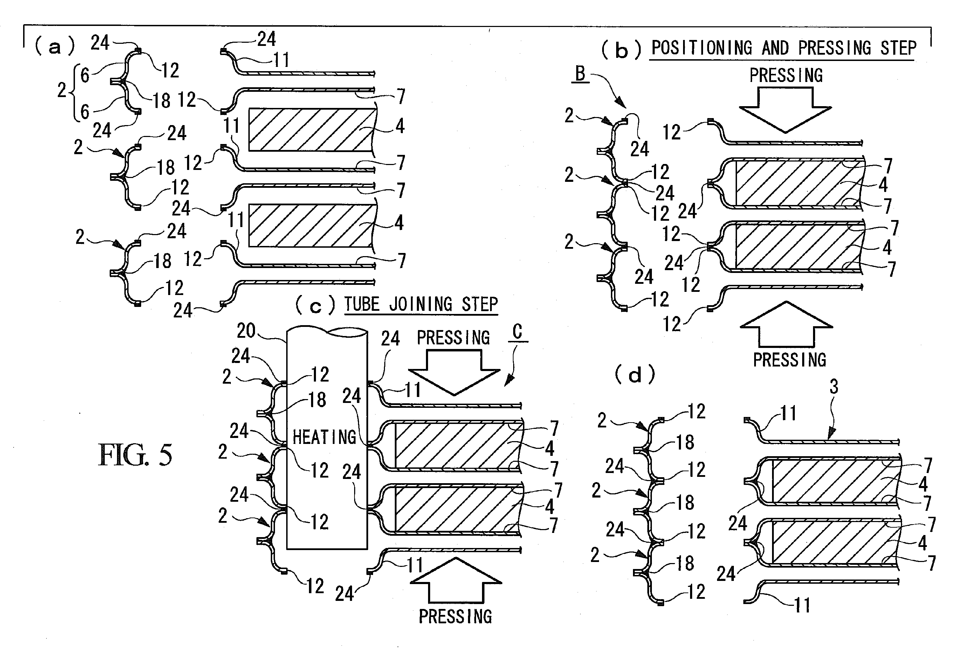

Next, a hot-water heater manufacturing method according to a second embodiment of the present invention will be described with reference to Figs. 5(a) to 5(d). The hot-water heater manufacturing method includes the heating-medium circulating tube forming step A, a positioning and pressing step B, and a tube joining step C.

### A. Heating-Medium Circulating Tube Forming Step

Because the structure of the heating-medium circulating tube 2 and the heating-medium circulating tube forming step A of forming the heating-medium circulating tube 2 are the same as the heating-medium circulating tube forming step A of the first embodiment, shown in Figs. 3(a) to 3(c), a description thereof will be omitted. However, after Fig. 3(c), a step of attaching, in advance, a brazing filler metal 24 to the circumferential portions of the heating-medium circulating holes 12 of the heating-medium circulating tubes 2, as shown in Fig. 5(a), is added. Thus, a state in which the brazing filler metal 24 has been attached to the circumferential portions of the heating-medium circulating holes 12 of the heating-medium circulating tubes 2 is obtained. As the brazing filler metal 24, it is also preferable to use one having a lower melting point than the brazing filler metal 18, which is used in the heating-medium circulating tube forming step A. Note that, as described above, instead of the brazing filler metal 24, a liquid gasket (sealant) may be applied to perform joining by using the liquid gasket.

### B. Positioning and Pressing Step

Next, as shown in Fig. 5(a), the three heating-medium circulating tubes 2 formed in the above-described heating-medium circulating tube forming step A are arranged in parallel, and the heater members 4 are disposed between the heating-medium circulating tubes 2. Then, as shown in Fig. 5(b), the heating-medium circulating tubes 2 are laminated, the heating-medium circulating holes 12, which are formed so as to penetrate the heating-medium circulating tubes 2 in the laminating direction thereof, are aligned, and the heating-medium circulating tubes 2 and the heater members 4 are pressed in the laminating direction thereof while being positioned such that the heater members 4 are brought into close contact with the predetermined positions of the heater contact surfaces 7 of the heating-medium circulating tubes 2 with a moderate surface pressure (the positioning and pressing step B). In this way, when the laminated heating-medium circulating tubes 2 are pressed, the portions of brazing filler metal 24 attached to the circumferential portions of the heating-medium circulating holes 12 are pressed against each other.

### C. Tube Joining Step

Next, as shown in Fig. 5(c), the heating-medium circulating tubes 2 that have been positioned and pressed are joined (the tube joining step C). As in the first embodiment, the brazing iron (heating device) 20 is inserted into the inner circumferences of the heating-medium circulating holes 12 to heat the inner circumferential portions of the heating-medium circulating holes 12. Thus, the brazing filler metal 24 attached in advance to the circumferential portions of the heating-medium circulating holes 12 is melted, thus bringing the heating-medium circulating tubes 2 into close contact with each other. As shown in Fig. 5(d), the melted brazing filler metal 24 flows around the circumferences of the heating-medium circulating holes 12 along joint grooves that are formed on joint surfaces of the heating-medium circulating holes 12, due to capillary action, thereby integrally fixing the upper-and-lower heating-medium circulating tubes 2 to complete the heater main body 3.

In this way, by attaching, in advance, the brazing filler metal 24 to the circumferential portions of the heating-medium circulating holes 12, which become joint portions of the heating-medium circulating tubes 2, it is not necessary to apply a brazing filler metal from the outside, and it is merely necessary to heat the circumferential portions of the heating-medium circulating holes 12, in the tube joining step C. Therefore, it is possible to make the joining task in the tube joining step C simple and easy and also to equalize the brazing joint strength to improve the quality.

Furthermore, as the brazing filler metal 24, which is attached to the circumferential portions of the heating-medium circulating holes 12, one having a lower melting point than the brazing filler metal 18, which is used in the heating-medium circulating tube forming step A, is used, thereby making it possible to prevent the brazing filler metal 18, which constitutes the heating-medium circulating tubes 2, from being melted when the inner circumferential portions of the heating-medium circulating holes 12 are heated to braze the heating-medium circulating tubes 2, as in the first embodiment. Thus, the joining task in the tube joining step C can be made simple and easy.

### Third Embodiment

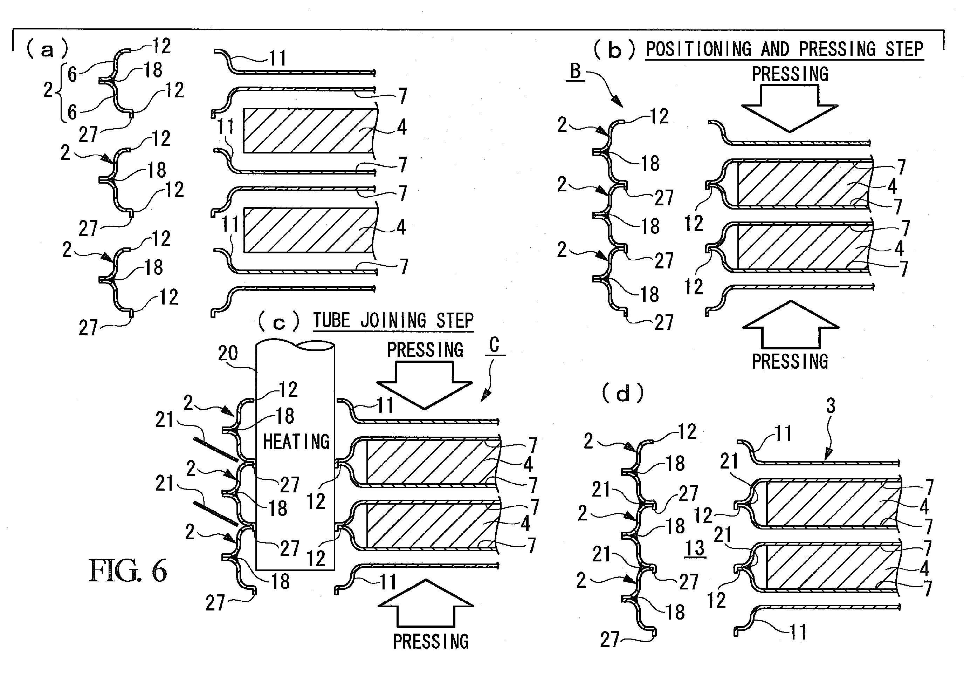

Next, a hot-water heater manufacturing method according to a third embodiment of the present invention will be described with reference to Figs. 6(a) to 6(d). The hot-water heater manufacturing method includes the heating-medium circulating tube forming step A, a positioning and pressing step B, and a tube joining step C.

### A. Heating-Medium Circulating Tube Forming Step

Because the structure of the heating-medium circulating tube 2 and the heating-medium circulating tube forming step A of forming the heating-medium circulating tube 2 are the same as the heating-medium circulating tube forming step A of the first embodiment, shown in Figs. 3(a) to 3(c), a description thereof will be omitted. As shown in Fig. 6(a), on the circumference of one (for example, lower) side of the upper-and-lower heating-medium circulating holes 12 of each of the heating-medium circulating tubes 2 of the third embodiment, an upright fitting flange 27 (fitting part) that is formed continuously in the circumferential direction thereof is provided, and the fitting flange 27 is closely fitted into the inner circumference of the other (here, upper) side of the upper-and-lower heating-medium circulating holes 12 of the facing heating-medium circulating tube 2.

### B. Positioning and Pressing Step

First, as shown in Fig. 6(a), the three heating-medium circulating tubes 2 are arranged in parallel, and the heater members 4 are disposed between the heating-medium circulating tubes 2. Then, as shown in Fig. 6(b), the heating-medium circulating tubes 2 are laminated, the heating-medium circulating holes 12 thereof are aligned, and, at the same time, the heating-medium circulating tubes 2 and the heater members 4 are pressed in the laminating direction thereof while being positioned such that the heater members 4 are brought into close contact with the predetermined positions of the heater contact surfaces 7 of the heating-medium circulating tubes 2 with a moderate surface pressure (the positioning and pressing step B).
To align the heating-medium circulating holes 12 of the heating-medium circulating tubes 2, the fitting flange 27, which is formed on the circumference of the lower-side heating-medium circulating hole 12 of each heating-medium circulating tube 2, is fitted into the upper-side heating-medium circulating hole 12 of the facing heating-medium circulating tube 2. Thus, the heating-medium circulating holes 12 of the upper-and-lower heating-medium circulating tubes 2 are fitted together, thus being positioned accurately.

### C. Tube Joining Step

Next, as shown in Fig. 6(c), the brazing iron 20 is inserted into the inner circumferences of the heating-medium circulating holes 12 to heat the inner circumferential portions of the heating-medium circulating holes 12. Then, the brazing filler metal 21 is supplied from the outer circumferential sides of the heating-medium circulating holes 12 to join the circumferential portions of the heating-medium circulating holes 12 through brazing (the tube joining step C). As shown in Fig. 6(d), the melted brazing filler metal 21 flows around the circumferences of the heating-medium circulating holes 12 due to capillary action, thereby integrally fixing the upper-and-lower heating-medium circulating tubes 2 to complete the heater main body 3. As the brazing filler metal 21 used here, it is also preferable to use one having a lower melting point than the brazing filler metal 18, which is used to assemble the heating-medium circulating tubes 2.

In this way, when the structure in which the fitting flange 27 formed on the circumference of one side of the upper-and-lower heating-medium circulating holes 12 of each heating-medium circulating tube 2 is fitted into the inner circumference of the other side of the upper-and-lower-side heating-medium circulating holes 12 of the facing heating-medium circulating tube 2 is adopted, because the facing heating-medium circulating holes 12 are closely fitted together by means of the fitting flange 27, it is possible to prevent the relative position of the facing heating-medium circulating tubes 2 from being shifted in the positioning and pressing step B, thereby making it possible to perform the positioning task simply and easily. Furthermore, by fitting the fitting flange 27 into the facing heating-medium circulating hole 12, the brazing area of this portion is increased; therefore, it is possible to enhance the brazing joint strength, thus increasing the durability of the hot-water heater 1 and improving the reliability. Note that, instead of the brazing filler metal 21, a liquid gasket may be used to join the heating-medium circulating tubes 2.

### Fourth Embodiment

Next, a hot-water heater manufacturing method according to a fourth embodiment of the present invention will be described with reference to Figs. 7(a) to 7(c). The hot-water heater manufacturing method includes the heating-medium circulating tube forming step A, a positioning and pressing step B, and a tube joining step C.

### A. Heating-Medium Circulating Tube Forming Step

Because the structure of the heating-medium circulating tube 2 and the heating-medium circulating tube forming step A of forming the heating-medium circulating tube 2 are the same as the heating-medium circulating tube forming step A of the first embodiment, shown in Figs. 3(a) to 3(c), a description thereof will be omitted. As in the third embodiment, on the circumference of one (for example, lower) side of the upper-and-lower heating-medium circulating holes 12 of each heating-medium circulating tube 2 of the fourth embodiment, an upright fitting flange 28 (fitting part) that is formed continuously in the circumferential direction thereof is provided, and the fitting flange 28 is closely fitted into the inner circumference of the other (here, upper) side of the upper-and-lower heating-medium circulating holes 12 of the facing heating-medium circulating tube 2. The height of the fitting flange 28 is set higher than that of the fitting flange 27 of the third embodiment by the thickness of a seal ring 29 shown in Fig. 7(a).

### B. Positioning and Pressing Step

As shown in Fig. 7(a), the three heating-medium circulating tubes 2 are arranged in parallel, and the heater members 4 are disposed between the heating-medium circulating tubes 2. At the same time, the seal rings 29 are interposed between the facing heating-medium circulating holes 12 of the heating-medium circulating tubes 2. Next, as shown in Fig. 7(b), the heating-medium circulating tubes 2 are laminated, and, as in the third embodiment, the fitting flange 28 formed on one side of the heating-medium circulating holes 12 is fitted into the other side of the heating-medium circulating holes 12 to position the heating-medium circulating holes 12. At the same time, the heating-medium circulating tubes 2 and the heater members 4 are pressed in the laminating direction thereof while being positioned such that the heater members 4 are brought into close contact with the predetermined positions of the heater contact surfaces 7 of the heating-medium circulating tubes 2 with a moderate surface pressure and such that the seal rings 29 are moderately compressed between the upper-and-lower heating-medium circulating tubes 2 (the positioning and pressing step B).

### C. Tube Joining Step

Next, as shown in Fig. 7(c), the diameter of the fitting flange 28 is expanded toward the radially outer side of the heating-medium circulating hole 12. This task is generally called swaging, and a swaging tool (not shown) is inserted into an inner diameter portion of the heating-medium circulating hole 12 to expand the diameter of the fitting flange 28 (the tube joining step C). Thus, the heating-medium circulating tubes 2 are tightly joined together while the seal rings 29 are compressed, thus completing the hot-water heater 1. Because the heating-medium circulating tubes 2 (the heating-medium circulating holes 12) are sealed in a liquid-tight manner by compressively interposing the seal rings 29 therebetween, the engine cooling water, which serves as a heating medium, flowing in the hot-water heater 1 does not leak out.

In this way, the fitting flange 28 formed on one side of the heating-medium circulating holes 12 of each heating-medium circulating tube 2 is fitted into the other side of the heating-medium circulating holes 12 of the facing heating-medium circulating tube 2, and the diameter of the fitting flange 28 is expanded radially outward, thereby coupling the facing heating-medium circulating tubes 2. Therefore, it is possible to enhance the coupling strength therebetween, thus improving the reliability of the hot-water heater 1. Furthermore, because brazing is not performed in the tube joining step C, it is possible to improve the product yield and to make the structure resistant to vehicle vibrations. Note that a liquid gasket may be used instead of the seal rings 29, and, in that case, the diameter of the fitting flange 28 need not be expanded radially outward.

### Modification

Fig. 8 is a longitudinal sectional view showing a modification of the present invention. As shown in Fig. 8, joint flanges 31 that are upright toward the inner side of each heating-medium circulating tube 2 are formed on the circumferences of the upper-and-lower heating-medium circulating holes 12 of the heating-medium circulating tube 2. By providing the joint flanges 31, when the brazing iron 20, shown in Fig. 4(c), is inserted into the inner circumferential portions of the heating-medium circulating holes 12 to perform brazing while heating the vicinities of the heating-medium circulating holes 12, because the areas where the heating-medium circulating holes 12 are brought into contact with the brazing iron 20 are increased, the heat of the brazing iron 20 is easily transferred to the heating-medium circulating holes 12, thus making brazing easy.

According to the above-described hot-water heater 1 manufactured by the hot-water heater manufacturing method of the present invention, because the heating-medium circulating tubes 2 and the heater members 4 are brought into close contact with each other with a moderate contact surface pressure and are fixed, it is possible to give stable heat exchange characteristics between the heating-medium circulating tubes 2 and the heater members 4. Furthermore, because the joint strength between the heating-medium circulating tubes 2 can be enhanced, even when the hot-water heater 1 is installed in a vehicle, it is possible to prevent damage to joint portions caused by engine vibrations and driving vibrations, thus improving the reliability.

Note that the hot-water heater manufacturing method of the present invention is not limited to the structures of the above-described embodiments, and various changes can be added without departing from the scope of the present invention. For example, the structures of the above-described embodiments can be combined. Furthermore, although the brazing iron 20 is used as the heating device in the above-described embodiments, another heating device can also be used.

### {Reference Signs List}

- 1: hot-water heater
- 2: heating-medium circulating tube
- 3: heater main body
- 4: heater member
- 6: tube constituent member
- 7: heater contact surface
- 12: heating-medium circulating hole
- 17: joining margin
- 18: brazing filler metal used in heating-medium circulating tube forming step
- 20: brazing iron (heating device)
- 21, 24: brazing filler metal used in tube joining step
- 27, 28: fitting flange (fitting part)
- 29: seal ring
- A: heating-medium circulating tube forming step
- B: positioning and pressing step
- C: tube joining step

## Claims

1. A hot-water heater manufacturing method in which a plurality of tube constituent members formed of a sheet-metal material are brazed, thus forming heating-medium circulating tubes having heater contact surfaces; the heating-medium circulating tubes are arranged in parallel and are joined such that a heating medium can circulate therebetween, thus forming a heater main body; and heater members are interposed between the heating-medium circulating tubes and are brought into close contact with the heater contact surfaces, thus heating the heating medium flowing in the heating-medium circulating tubes, the hot-water heater manufacturing method comprising:
a heating-medium circulating tube forming step of forming the heating-medium circulating tubes by brazing the tube constituent members;
a positioning and pressing step of arranging the heating-medium circulating tubes in parallel, disposing the heater members between the heating-medium circulating tubes, and, while positioning the heating-medium circulating tubes and the heater members, pressing the heating-medium circulating tubes and the heater members in a laminating direction thereof such that the heater members are brought into close contact with the heater contact surfaces of the heating-medium circulating tubes; and
a tube joining step of joining the heating-medium circulating tubes that have been positioned in the positioning and pressing step.

2. A hot-water heater manufacturing method according to claim 1,
wherein, in the positioning and pressing step, the heating-medium circulating tubes are laminated and positioned such that heating-medium circulating holes that are formed so as to penetrate the heating-medium circulating tubes in the laminating direction thereof are aligned; and
in the tube joining step, circumferential portions of the heating-medium circulating holes are joined through brazing by inserting a heating device into inner circumferences of the heating-medium circulating holes to heat inner circumferential portions of the heating-medium circulating holes.

3. A hot-water heater manufacturing method according to claim 1 or 2,
wherein, in the heating-medium circulating tube forming step, the heating-medium circulating tubes are formed by brazing the tube constituent members;
joining of the heating-medium circulating tubes in the tube joining step is performed also through brazing; and
a brazing filler metal having a lower melting point than a brazing filler metal that is used in the heating-medium circulating tube forming step is used as a brazing filler metal that is used in the tube joining step.

4. A hot-water heater manufacturing method according to claim 2 or 3, wherein a brazing filler metal is attached, in advance, to the circumferential portions of the heating-medium circulating holes, and the brazing filler metal is melted in the tube joining step, thereby joining the circumferential portions of the heating-medium circulating holes through brazing.

5. A hot-water heater manufacturing method according to one of claims 2 to 4, wherein the circumferential portions of the heating-medium circulating holes are provided with sections having fitting shapes, and the sections having the fitting shapes are fitted into the facing heating-medium circulating holes in the positioning and pressing step, thereby performing positioning.

6. A hot-water heater manufacturing method according to claim 5, wherein the sections having the fitting shapes are upright fitting flanges that are formed continuously in the circumferential directions of the heating-medium circulating holes.

7. A hot-water heater manufacturing method according to claim 6, wherein, in the positioning and pressing step, the fitting flanges are fitted into the facing heating-medium circulating holes, and then, in the tube joining step, the fitting flanges are expanded in diameter toward radially outer sides of the heating-medium circulating holes, thereby joining the heating-medium circulating tubes.

8. A hot-water heater manufactured by a hot-water heater manufacturing method according to one of claims 1 to 7.
